# EUROPÄISCHE PATENTSCHRIFT

(11) **EP 0 730 928 B1**
(45) Veröffentlichungstag und Bekanntmachung des Hinweises auf die Patenterteilung: **02.06.1999**
(21) Anmeldenummer: 96103109.3
(22) Anmeldetag: 01.03.1996
(51) Int. Cl.: B23D 45/14, B23Q 1/28

(54) **Klinkschnittsäge**
Miter saw
Scie à onglets

(30) Priorität: 04.03.1995 DE 19507576
(43) Veröffentlichungstag der Anmeldung: 11.09.1996
(73) Patentinhaber: Pressta-Eisele GmbH, 56859 Bullay (DE)
(72) Erfinder: Hunke, Heinz Theo, D-56821 Ellenz-Poltersorf (DE)
(74) Vertreter: Grommes, Karl F., Dr.

(56) Entgegenhaltungen:
- DE-A- 3 544 058
- DE-U- 7 033 783
- GB-A- 2 112 677
- GB-A- 2 183 511
- US-A- 2 436 526
- US-A- 3 291 166

## Beschreibung

### Technisches Gebiet

Die Erfindung betrifft eine Klinkschnittsäge, wie sie in dem Gattungsbegriff des Anspruchs 1 näher definiert ist Siehe DE-A-35 44 058.

### Stand der Technik

Klinkschnittsägen werden unter anderem von Schreinereien, Zimmerleuten sowie Fenster- und Fassadenherstellern benötigt. Sie bestehen aus zwei Sägeblättern, die einen vorgegebenen Winkel zueinander (z.B. 90°) aufweisen. Zur Ausrichtung der Sageblätter müssen die beiden jeweils aus Sägeblatt, Motor und Halterung bestehenden Sägeaggregate, die an einem gemeinsamen Gestell angeordnet sind, einzeln eingestellt werden.

Nachteilig ist bei den bekannten Klinkschnittsägen vor allem, daß die Einstellung der Sägeaggregate relativ zeitaufwendig ist, wenn ein vorgegebener Klinkschnitt (z.B. von 90°) in verschiedenen Positionen durchgeführt wird, weil in jeder Position für jedes Sägeaggregat getrennt eine Neueinstellung erfolgen muß. Außerdem ist eine derartige Neueinstellung stets mit Ungenauigkeiten verbunden.

### Darstellung der Erfindung

Der vorliegenden Erfindung liegt die Aufgabe zugrunde, eine Klinkschnittsäge anzugeben, bei der die Sägeaggregate schnell und genau einstellbar sind, und zwar auch dann, wenn ein Klinkschnitt in verschiedenen Positionen durchgeführt werden muß.

Diese Aufgabe wird erfindungsgemäß durch die Merkmale des kennzeichnenden Teils des Anspruchs 1 gelöst. Die Unteransprüche geben besonders vorteilhafte Ausgestaltungen der Erfindung wieder.

Die Erfindung beruht im wesentlichen auf dem Gedanken, beide Sägeaggregate um die Längsachse eines gemeinsamen Lagers des Gestells schwenkbar anzuordnen. Hierzu sind die Sägeaggregate jeweils an einem Schwenkarm befestigt, wobei jeder Schwenkarm mit einer Welle verbunden ist. Die Drehachsen der beiden Wellen stimmen mit der Lage der Längsachse des Lagers überein. Eine der beiden Wellen ist dabei als Hohlwelle ausgebildet, in welcher die jeweils zweite Welle (Klemmwelle) schwenkbar gelagert ist.

Mit der erfindungsgemäßen Klinkschnittsäge können beide Sägeaggregate stufenlos einzeln eingestellt werden. Außerdem können die Wellen auf einfache Weise mit Hilfe einer Spannvorrichtung miteinander verbunden werden, so daß die Sägeaggregate auch gemeinsam stufenlos verstellt werden können. Bei Durchführung eines Klinkschnittes in verschiedenen Positionen ist daher, anders als bei den bekannten Sägen, eine separate Einstellung der Sägeaggregate nicht erforderlich.

Eine besonders schnelle Fixierung der beiden Wellen kann mit Hilfe einer hydraulischen Spannvorrichtung erreicht werden. Hierzu enthält die Klemmwelle eine sich von ihrem einen Ende in ihr Inneres erstreckende zentrale Ausnehmung, die mit einer hydraulischen Flüssigkeit gefüllt werden kann und mit Druck beaufschlagbar ist. Umfangseitig sind in der Mantelfläche der inneren Welle ebenfalls Ausnehmungen vorgesehen, in denen radial verschiebbare Klemmelemente angeordnet sind. Diese Ausnehmungen sind mit der zentralen Ausnehmung beispielsweise über Bohrungen verbunden, so daß bei Druckbeaufschlagung der hydraulischen Flüssigkeit die Klemmelemente radial nach außen gegen die Innenwand der Hohlwelle gedrückt werden.

### Kurze Beschreibung der Zeichnung

Weitere Einzelheiten und Vorteile der Erfindung werden im folgenden anhand eines in Figuren dargestellten Ausführungsbeispieles erläutert. Es zeigen:
- Fig.1: einen Längsschnitt einer erfindungsgemäßen Klinkschnittsäge;
- Fig.2: eine perspektivische Ansicht der Klinkschnittsäge nach Fig.1 ohne Sägeblätter;
- Fig.3: eine Seitenansicht der die Klemmeinrichtung enthaltenden Welle und
- Fig.4: einen vergrößerten Querschnitt der in Fig.3 dargestellten Welle entlang der dort mit IV-IV bezeichneten Schnittlinie.

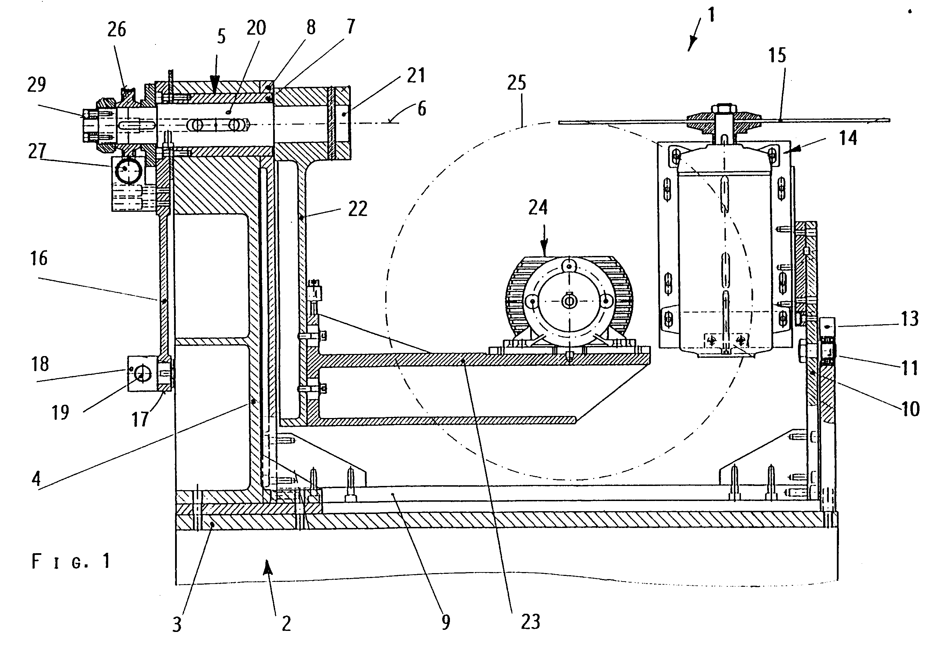

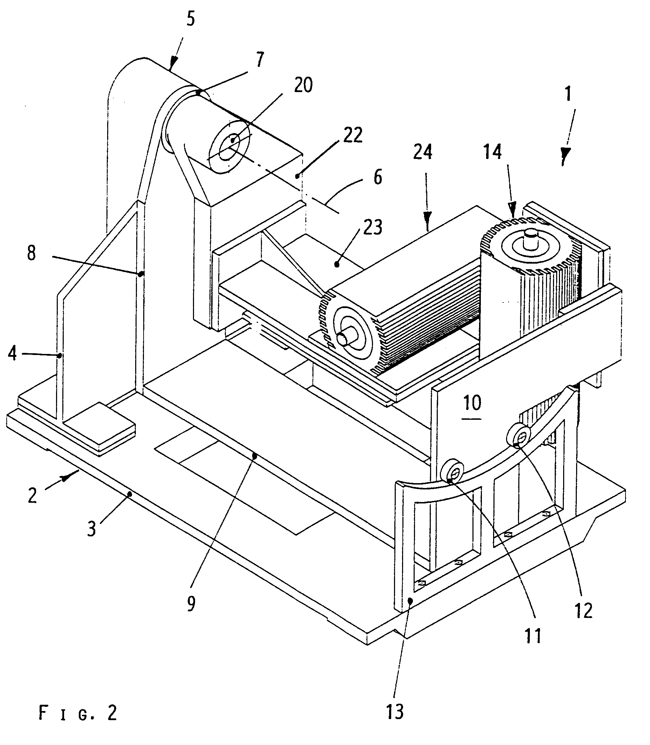

In den Fig.1 und 2 ist mit 1 eine erfindungsgemäße Klinkschnittsäge bezeichnet, die aus einem Gestell 2 besteht, welches sich aus einem Untergestell 3 und einem Ständer 4 zusammensetzt. An dem Ständer 4 ist ein Lager 5 angeordnet, welches die Längsachse 6 besitzt. In dem Lager 5 ist eine Hohlwelle 7 um die Längsachse 6 schwenkbar gelagert, welche über einen ersten Schwenkarm 8 mit einer gondelartigen Konsole 9 verbunden ist. An dieser Konsole 9, die sich an ihrem dem Schwenkarm 8 abgewandten Ende 10 über entsprechende Räder 11, 12 an einem Stützrahmen 13 des Gestells 2 abstützt, ist ein erstes Sägeaggregat 14 mit einem Sägeblatt 15 (Fig.1) befestigt.

Zur Einstellung des Winkels des Sägeblattes 15 -bzw. des Sägeaggregates 14- wird der Schwenkarm 8 mittels eines an der Hohlwelle 7 befestigten Verstellarmes 16 (Fig.1) verschwenkt. Der Verstellarm 16 ist hierzu an seinem der Hohlwelle 7 abgewandten Ende 17 über eine Drehmutter 18 und eine Gewindespindel 19 mit einem aus übersichtlichkeitsgründen nicht dargestellten Antrieb verbunden.

Innerhalb der Hohlwelle 7 ist eine Klemmwelle 20 schwenkbar gelagert, an deren ersten Ende 21 sich ein zweiter Schwenkarm 22 befindet. Der Schwenkarm 22 ist mit einer Konsole 23 verbunden, auf der ein zweites Sägeaggregat 24 mit einem Sägeblatt 25 (in Fig.1 gestrichelt dargestellt) befestigt ist.

Zur Einstellung des Winkels des Sägeblattes 25 -bzw. des Sägeaggregates 24- ist auf der dem Schwenkarm 22 abgewandten Seite der Klemmwelle 20 ein Schneckenrad 26 (Fig.1) befestigt, welches mittels einer Schneckenwelle 27 von einem entsprechenden nicht dargestellten Antrieb gedreht wird.

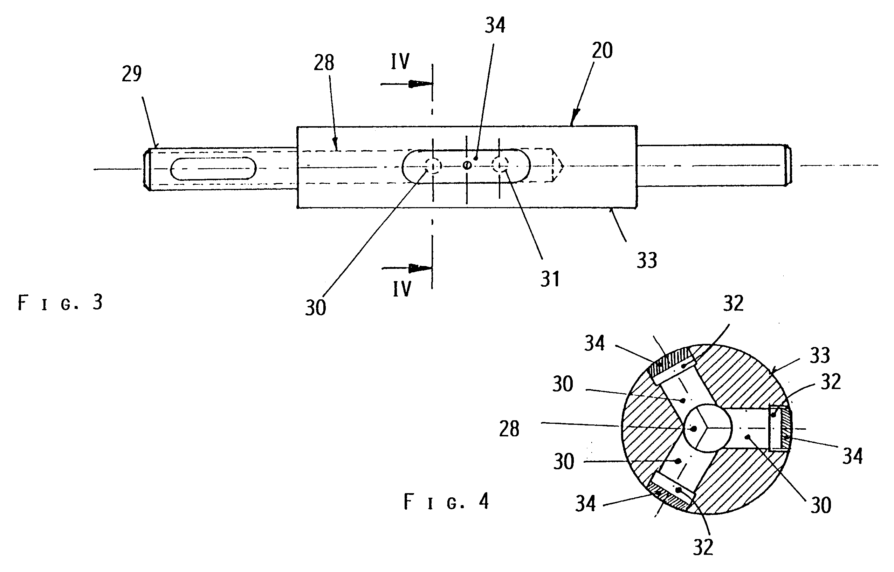

Wie den Fig.3 und 4 zu entnehmen ist, besitzt die Klemmwelle 20 eine axiale Ausnehmung 28, welche im Betrieb der Klinkschnittsäge 1 mit einem hydraulischen Medium (z.B. Öl) gefüllt ist. Die Ausnehmung 28 erstreckt sich von dem zweiten Ende 29 der Klemmwelle 20, an dem eine Druckquelle anschließbar ist, bis in das Innere der Klemmwelle 20 und ist über Öffnungen (z.B. Bohrungen) 30, 31 mit drei um 120° versetzt angeordneten Ausnehmungen 32 in der Mantelfläche 33 der Klemmwelle 16 verbunden (Fig.4). In den Ausnehmungen 32 befinden sich radial verschiebbare Druckstücke (Klemmelemente) 34.

Sobald die hydraulische Flüssigkeit in der Ausnehmung 28 mit Druck beaufschlagt wird, werden die Druckstücke 34 radial nach außen gegen die innere Oberfläche 35 der Hohlwelle 7 gedrückt (Fig.1), so daß beim Schwenken einer der beiden Wellen 7 bzw. 20 die jeweils andere Welle 20 bzw. 7 mitgenommen wird.

Die Erfindung ist selbstverständlich nicht auf das beschriebene Ausführungsbeispiel beschränkt. So kann beispielsweise anstatt einer hydraulischen Ansteuerung der Druckstücke 34 auch eine pneumatische Ansteuerung erfolgen. Außerdem ist es auch möglich, die Wellen 7 und 20 rein mechanisch miteinander zu verbinden.

### Bezugszeichenliste

- 1: Klinkschnittsäge
- 2: Gestell
- 3: Untergestell
- 4: Ständer
- 5: Lager
- 6: Längsachse
- 7: Hohlwelle
- 8: erster Schwenkarm, Schwenkarm
- 9: gondelartige Konsole
- 10: Ende
- 11,12: Räder
- 13: Stützrahmen
- 14: erstes Sägeaggregat
- 15: Sägeblatt
- 16: Verstellarm
- 17: Ende des Verstellarmes
- 18: Drehmutter
- 19: Gewindespindel
- 20: Klemmwelle
- 21: erstes Ende der Klemmwelle
- 22: zweiter Schwenkarm, Schwenkarm
- 23: Konsole
- 24: zweites Sägeaggregat
- 25: Sägeblatt
- 26: Schneckenrad
- 27: Schneckenwelle
- 28: Ausnehmung
- 29: zweites Ende
- 30,31: Öffnungen, Bohrungen
- 32: Ausnehmung
- 33: Mantelfläche
- 34: Klemmelement, Druckstück
- 35: innere Oberfläche der Hohlwelle

## Patentansprüche

1. Klinkschnittsäge mit zwei Sägeaggregaten (14,24), die je nach vorgegebenem Klinkschnitt unabhängig voneinander an einem gemeinsamen Gestell (2) einstellbar angeordnet sind, **dadurch gekennzeichnet,** daß die beiden Sägeaggregate (14,24) jeweils an einem Schwenkarm (8,22) befestigt sind, daß die beiden Schwenkarme (8,22) um die Längsachse (6) eines gemeinsamen Lagers (5) des Gestells (2) schwenkbar angeordnet sind, und daß beide Schwenkarme (8,22) form- und/oder kraftschlüssig miteinander verbindbar sind, so daß beide Sägeaggregate (14,24) um die Längsachse (6) des Lagers (5) gemeinsam verschwenkbar sind.

2. Klinkschnittsäge nach Anspruch 1, **dadurch gekennzeichnet,** daß jeder Schwenkarm (8,22) der Klinkschnittsäge (1) mit einer Welle (7,20) verbunden ist, daß die eine der beiden Wellen (7) als Hohlwelle ausgebildet ist, in der die jeweils zweite Welle (Klemmwelle) (20) schwenkbar gelagert ist, und daß die Hohlwelle (7) in dem Lager (5) des Gestells (2) verschwenkbar angeordnet ist.

3. Klinkschnittsäge nach Anspruch 2, **dadurch gekennzeichnet,** daß die Klemmwelle (20) eine sich von ihrem einen Ende (29) axial in das Innere erstreckende zentrale Ausnehmung (28) aufweist, daß die zentrale Ausnehmung (28) über Öffnungen (30,31) mit umfangseitig in der Mantelfläche (33) der Klemmwelle (20) angeordneten Ausnehmungen (32) verbunden ist, und daß sich in den Ausnehmungen (32) der Mantelfläche (33) radial verschiebbare Klemmelemente (34) befinden, so daß bei Druckbeaufschlagung der zentralen Ausnehmung (28) die Klemmelemente (34) radial nach außen gegen die innere Oberfläche (35) der Hohlwelle (7) gedrückt werden.

4. Klinkschnittsäge nach Anspruch 3, **dadurch gekennzeichnet,** daß die Ausnehmungen (32), die sich in der Mantelfläche (33) der Klemmwelle (20) befinden, über mindestens zwei Bohrungen (30,31) mit der zentralen Ausnehmung (28) verbunden sind.

5. Klinkschnittsäge nach Anspruch 3 oder 4, **dadurch gekennzeichnet,** daß in der Mantelfläche (33) der Klemmwelle (20) mindestens drei um 120° versetzte Ausnehmungen (32) mit Klemmelementen (34) angeordnet sind.

6. Klinkschnittsäge nach einem der Ansprüche 2 bis 5, **dadurch gekennzeichnet,** daß zur Einstellung des mit der Klemmwelle (20) verbundenen Sägeaggregates (24) an der Klemmwelle (20) ein Schneckenrad (26) angeordnet ist, in welches die Schneckenwelle (27) eines entsprechenden Antriebes eingreift.

7. Klinkschnittsäge nach einem der Ansprüche 2 bis 6, **dadurch gekennzeichnet**, daß zur Einstellung des an der Hohlwelle (7) angeordneten Sägeaggregates (14) an der Hohlwelle (7) ein Verstellarm (16) vorgesehen ist, welcher über eine Drehmutter (18) und eine Gewindespindel (19) mit einem Antrieb verbunden ist.

## Claims

1. A mitre saw with two saw units (14, 24) which are adjustably arranged according to a given mitre independently of each other on a common frame (2), characterised in that the two saw units (14, 24) are respectively fastened to a swivel arm (8, 22), that the two swivel arms (8, 22) are swivellably arranged about the longitudinal axis (6) of a common bearing (5) of the frame (2), and that the two swivel arms (8, 22) are connectable with each other in a form-fitting and/or force-fitting manner, so that the two saw units (14, 24) are swivellable jointly about the longitudinal axis (6) of the bearing (5).

2. A mitre saw according to Claim 1, characterised in that each swivel arm (8, 22) of the mitre saw (1) is connected with a shaft (7, 20), that one of the two shafts (7) is constructed as a hollow shaft in which the respectively second shaft (clamping shaft) (20) is swivellably mounted, and that the hollow shaft (7) is swivellably arranged in the bearing (5) of the frame (2).

3. A mitre saw according to Claim 2, characterised in that the clamping shaft (20) has a central recess (28) extending axially into the interior from its one end (29), that the central recess (28) is connected via openings (30, 31) with recesses (32) arranged peripherally in the covering surface (33) of the clamping shaft (20), and that radially displaceable clamping members (34) are present in the recesses (32) of the covering surface (33), so that with pressure load of the central recess (28) the clamping members (34) are pressed radially outwards towards the inner surface (35) of the hollow shaft (7).

4. A mitre saw according to Claim 3, characterised in that the recesses (32) which are situated in the covering surface (33) of the clamping shaft (20), are connected via at least two bores (30, 31) with the central recess (28).

5. A mitre saw according to Claim 3 or 4, characterised in that in the covering surface (33) of the clamping shaft (20) at least three recesses (32), staggered through 120°, are arranged with clamping members (34).

6. A mitre saw according to one of Claims 2 to 5, characterised in that to adjust the saw unit (24), connected with the clamping shaft (20), on the clamping shaft (20) a worm gear (26) is arranged, into which the worm shaft (27) of a corresponding drive engages.

7. A mitre cut saw according to one of Claims 2 to 6, characterised in that to adjust the saw unit (14) arranged on the hollow shaft (7), on the hollow shaft (7) an adjusting arm (16) is provided, which is connected with a drive by means of a rotary nut (18) and a threaded spindle (19).

## Revendications

1. Scie à onglets, comportant deux groupes de sciage (14, 24), disposés de façon réglable indépendamment l'un de l'autre sur un bâti (2) commun, en fonction d'une coupe en onglets prédéterminée, caractérisée par le fait que les deux groupes de sciage (14, 24) sont chacun fixés sur un bras pivotant (8, 22), par le fait que les deux bras pivotants (8, 22) sont disposés de façon à pouvoir pivoter autour de l'axe longitudinal (6) d'un palier (5) commun du bâti (2), et par le fait que les deux bras pivotants (8, 22) sont susceptibles d'être reliés ensemble par une liaison par ajustement de forme et/ou par interaction de forces, de manière que les deux groupes de sillage (14, 24) soient susceptibles de pivoter conjointement autour de l'axe longitudinal (6) du palier (5).

2. Scie à onglets selon la revendication 1, caractérisée par le fait que chaque bras pivotant (8, 22) de la scie à onglets (1) est relié à un arbre (7, 20), par le fait que l'un des deux arbres (7) est réalisé sous la forme d'un arbre creux, dans lequel chaque fois le deuxième arbre (arbre de serrage) (20) est monté de façon à pouvoir pivoter, et par le fait que l'arbre creux (7) est disposé de façon à pouvoir pivoter dans le palier (5) du bâti (2).

3. Scie à onglets selon la revendication 2, caractérisée par le fait que l'arbre de serrage (20) présente un évidement central (28) s'étendant axialement à l'intérieur depuis une (29) de ses extrémités, par le fait que l'évidement central (28) est relié, par des ouvertures (30, 31), à des évidements (32) disposés dans la surface d'enveloppe (33) de l'arbre de serrage (20), et par le fait que, dans les évidements (32) de la surface d'enveloppe (33), se trouvent des éléments de serrage (34) déplaçables radialement, de manière que, en cas de sollicitation par une pression de l'évidement central (28), les éléments de serrage (34) soient pressés radialement vers l'extérieur contre la surface intérieure (35) de l'arbre creux (7).

4. Scie à onglets selon la revendication 3, caractérisée par le fait que les évidements (32) qui se trouvent dans la surface d'enveloppe (33) de l'arbre de serrage (20) sont reliés à l'évidement central (28) par au moins deux perçages (30, 31).

5. Scie à onglets selon la revendication 3 ou 4, caractérisée par le fait que dans la surface d'enveloppe (33) de l'arbre de serrage (20) sont disposés au moins trois évidements (32), décalés de 120°, comportant des éléments de serrage (34).

6. Scie à onglets selon l'une des revendications 2 à 5, caractérisée par le fait que, pour assurer le réglage du groupe de sciage (24) relié à l'arbre de serrage (20), sur l'arbre de serrage (20) est disposée une roue à vis (26) dans laquelle s'engrène l'arbre de vis (27) d'un entraînement correspondant.

7. Scie à onglets selon l'une des revendications 2 à 6, caractérisée par le fait que, pour assurer le réglage du groupe de sciage (14) disposé sur l'arbre creux (7), est prévu sur l'arbre creux (7) un bras de réglage (16) relié à un entraînement, par l'intermédiaire d'un écrou rotatif (18) et d'une broche filetée (19).
